# EUROPEAN PATENT APPLICATION

(11) **EP 0 883 059 A2**
(43) Date of publication of application: **09.12.1998**
(21) Application number: 98110237.9
(22) Date of filing: 04.06.1998
(51) Int. Cl.: G06F 9/45

(54) **Compiler applicable to nonblocking cache memory and code scheduling method thereof**

(30) Priority: 04.06.1997 JP 146482/97
(71) Applicant: NEC CORPORATION, Tokyo (JP)
(72) Inventor: Funama, Masaaki, Minato-ku, Tokyo (JP)
(74) Representative: Betten & Resch

(57) **Abstract**

A compiler comprises a front end (21, 1111), an object code generation unit (24, 1112) for generating a code of an object program, and a code scheduling unit (23, 1120) for conducting code scheduling of an object code for the reduction of cache miss penalty based on an analysis result obtained by the front end (21, 1111) and profile data, the code scheduling unit (23, 1120) including a profile data analysis unit (25) for detecting cache miss penalty existing in profile data and a code scheduling execution unit (26) for generating a dummy instruction code for lowering cache miss penalty and inserting the same into an object program.

## Description

### BACKGROUND OF THE INVENTION

### FIELD OF THE INVENTION

The present invention relates to a compiler which generates a code of an object program from a source program and a code scheduling method thereof and, more particularly, to a compiler which generates a code for a computer system adopting a nonblocking cache system and a code scheduling method thereof.

### DESCRIPTION OF THE RELATED ART

Computer systems of today commonly are equipped with a high-speed cache memory arranged between a CPU and a main memory to speed up access to data placed in the main memory. Provision of a cache memory enables a computer system to have improved execution performance because when necessary data exists in the cache memory, access to a low-speed main memory is unnecessary. With a simple cache system, however, when a cache miss occurs which is a state of non-existence of necessary data in a cache memory, execution performance will be on the contrary lowered because a CPU stops until reading of data from a main memory into the cache memory is completed.

Under these circumstances, methods of reducing degradation of execution performance in a case of the generation of a cache miss have been conventionally proposed. As one of the techniques of this kind, for example, Japanese Patent Laying-Open (Kokai) No. Heisei 3-282734, entitled "Instruction Arrangement Optimizing Compiler" recites a method of scheduling instructions so as to lower cache miss penalty at the execution of instructions in a computer having a cache memory between a CPU and a main memory which conduct pipelining processing. Cache miss penalty here denotes that at the time of loading of data from a main memory to a register, if the data does not exist on the cache memory, a CPU will stop until data reading from the main memory into the cache memory (this is called replacement into a cache memory) is completed to lower execution efficiency.

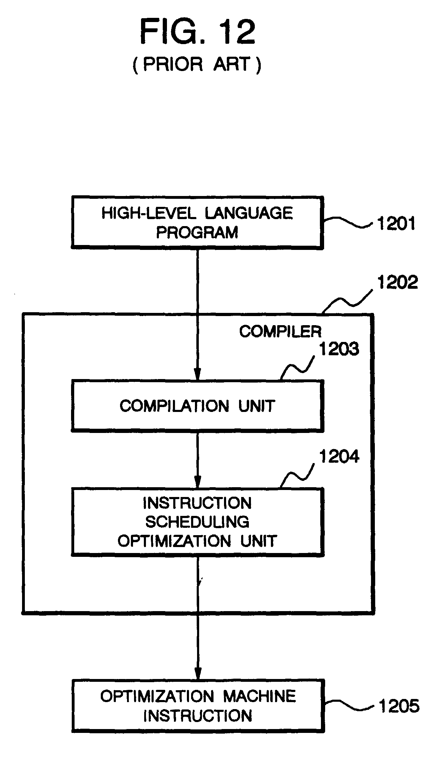

Next, the method recited in the above official gazette, Patent Laying-Open No. Heisei 3-282734, will be described with reference to Fig. 12. A program 1201 is compiled by a compilation unit 1203 and converted into machine instructions. An instruction scheduling optimization unit 1204 checks instructions output from the compilation unit 1203 to detect an instruction which causes a cache miss. Then, at a position immediately preceding the detected instruction causing a cache miss, the unit 1204 schedules an instruction which can be executed during the data reading from a main memory into a cache memory and whose execution requires a plurality of cycles to prevent a CPU from unnecessarily stopping while data reading from the main memory into the cache memory is executed as a result of a cache miss.

The above literature discloses application of the above-described instruction scheduling method to access to an instruction cache memory made at the execution of instruction fetch in which a main memory access pattern is relatively predictable. As to data access, the literature recites only a method of sequentially referring to a main memory as is done in instruction fetch.

Another conventional technique of reducing degradation of execution performance at the time when a cache miss occurs is disclosed in Japanese Patent Laying-Open (Kokai) No. Heisei 4-44139, entitled "Prefetch Control System". The literature recites a method of improving processing efficiency of data reference to a main memory by checking whether data necessary for processing of a program exists in a cache memory or not and when it does not exist, adding, to an instruction set, a prefetch instruction enabling reading of data into the cache memory to be executed simultaneously with execution of other instruction and inserting the prefetch instruction at a position preceding data reference processing. Although the above Patent Laying-Open No. Heisei 4-44139 discloses a method of realizing a prefetch instruction by hardware, it fails to recite how prefetch instructions are scheduled.

As further measures of reducing degradation of execution performance at the occurrence of a cache miss, a nonblocking cache system is proposed in which generation of a cache miss will not stop operation of a CPU and even when a cache miss exists, access to a cache memory by other instruction is possible. A technique of this kind is recited, for example, in the literature "Computer Architecture: A Quantative Approach" (John, L. Henessy & David A. Patterson, 1996, pp.414-416)

Recited in the literature "Computer Architecture: A Quantative Approach" on pages 402 to 404, as a scheduling method which lowers cache miss penalty caused by an instruction by taking a nonblocking cache system into consideration, is a method of prefetching, in a loop, data for use in future repetition (which is referred to as iteration) of the loop. Application of this method is, however, limited to data reference within a loop.

As described in the foregoing, a conventional scheduling method intended for lowering cache miss penalty caused by an instruction has a disadvantage that when a load instruction not existing in a loop causes a cache miss, if scheduling is conducted such that before the completion of reading of data in question into a cache memory, an instruction to refer to the data is further executed, cache miss penalty (referred to as Access Before Refill, hereinafter denoted as ABR) still occurs.

On the other hand, the scheduling method taking a nonblocking cache memory into consideration recited in the literature "Computer Architecture: A Quantative Approach" requires predetermined conditions of a nonblocking cache system. Since in general, multiple cache misses are likely to occur due to many times of execution of a load instruction in an iteration of a loop, the scheduling method recited in the above literature in which prefetch is conducted in a loop requires a system of allowing further access to a cache memory even when a cache miss occurs many times. This characteristic of a nonblocking cache system is referred to as "1 hit under n miss" (n: integer), which allows a succeeding instruction to access a cache memory even when a number n of cache misses occur. When a number n + 1 of cache misses occur, however, a succeeding instruction is not allowed to make access to the cache memory unless reading of data which caused a cache miss previously is completed.

The scheduling method recited in the above literature has a further disadvantage that at a CPU adopting a system whose allowable number of cache misses is small, penalty might be on the contrary increased. With a CPU, for example, having the characteristic of "1 hit under 1 miss", the severest constraint, when after a load instruction causes a cache miss, if another access to the cache memory is made before replacement of the data in question into a cache memory is completed, generation of cache misses will overlap with each other (this is referred to as Double Cache Miss and will be denoted as DCM hereinafter).

### SUMMARY OF THE INVENTION

An object of the present invention is to provide a compiler for a computer system adopting a nonblocking cache system which is allowed to generate an object code whose execution rate is high by lowering cache miss penalty and a code scheduling method thereof.

Another object of the present invention is to provide a compiler for a computer system adopting a nonblocking cache system to have improved execution efficiency in the execution of processing using a generated object code.

According to the first aspect of the invention, a compiler for compiling a source program to generate a code of an object program for a computer system applicable to a nonblocking cache memory, comprises
analysis means for receiving input of a source program to conduct lexical analysis and parsing,
code generation means for generating a code of an object program based on an analysis result obtained by the analysis means, and
code scheduling means for conducting code scheduling for the reduction of cache miss penalty based on an analysis result obtained by the analysis means and profile data recording information about the operation of a CPU obtained by executing a code generated by the code generation means,
   the code scheduling means comprises
   profile data analysis means for referring to an analysis result obtained by the analysis means and analyzing the profile data to detect cache miss penalty existing in the profile data; and
   scheduling execution means for generating and inserting, with respect to a load instruction which causes a cache miss detected by the profile data analysis means , a dummy instruction code for reading ahead data to be read by the load instruction.

In the preferred construction, the profile data at least includes information regarding generation of cache miss penalty at the execution of the code and generation of the processing for replacing data into the cache memory according to the cache miss.

In the preferred construction, the analysis means constitutes a front end and the code generation means and the code scheduling means constitute a back end , and wherein the back end receives input of the analysis result from the front end which is the analysis means to first generate a code of the object program, next invalidates the code scheduling means to generate the profile data by using the generated code, and then validates the code scheduling means to generate a code with the dummy instruction code inserted by using the profile data.

In another preferred construction, the analysis means and the code generation means constitute compilation means , and wherein the compilation means generates a primary code of the object program by the processing by the analysis means and the code generation means , as well as generating the profile data by using the primary code, and the code scheduling means inserts the dummy instruction code into the primary code by using the profile data.

In another preferred construction, the profile data analysis means analyzes, out of the profile data, information regarding a cache miss and information regarding generation conditions for the processing of replacing data into the cache memory prior to the generation of cache miss penalty, and detects a longest period when no processing takes place for replacing data into the cache memory by the analysis.

Also, the scheduling execution means inserts a prefetch instruction to store data in the cache memory in advance ahead of a main memory access instruction which causes cache miss penalty in a code of the object program generated by the code generation means.

According to the second aspect of the invention, a code scheduling method of a compiler for scheduling codes of an object program obtained by compilation of a source program so as to be applied to a nonblocking cache memory, comprising the steps of
receiving input of a source program to conduct lexical analysis and parsing,
generating a code of an object program based on an analysis result obtained by the analysis step, and
conducting code scheduling for the reduction of cache miss penalty based on an analysis result obtained by the analysis step and profile data recording information about the operation of a CPU obtained by executing a code generated by the code generation step,
   the code scheduling step including
   referring to an analysis result obtained by the analysis step and analyzing the profile data to detect cache miss penalty existing in the profile data, and
   with respect to a load instruction which causes a cache miss detected by the cache miss penalty detection step, generating and inserting a dummy instruction code for reading ahead data to be read by the load instruction.

In the preferred construction, the cache miss penalty detection step including
analyzing, out of the profile data, information regarding a cache miss and information regarding generation conditions for the processing of replacing data into the cache memory prior to the generation of cache miss penalty, and
detecting a longest period when no processing takes place for replacing data into the cache memory by the analysis.

In another preferred construction, at the dummy code insertion step, a prefetch instruction to store data in the cache memory in advance is inserted ahead of a main memory access instruction which causes cache miss penalty in a code of the object program generated by the code generation step.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing structure of a compiler according to one embodiment of the present invention.
Fig. 2 is a flow chart showing operation of the present embodiment.
Fig. 3 is a flow chart showing operation of a code scheduling unit according to the present embodiment.
Fig. 4 is a diagram showing structure of profile data.
Fig. 5 is a diagram showing a correspondence relationship among profile data, an object code and an input code required of profile data.
Fig. 6 is a diagram showing a concrete example of profile data.
Fig. 7 is a diagram showing profile data of an object code obtained as a result of code scheduling executed with respect to the profile data of Fig. 6 according to the present embodiment.
Fig. 8 is a diagram showing generation of Double Cache Miss caused by a dummy load instruction inserted according to the present embodiment.
Fig. 9 is a diagram showing a state of code scheduling executed according to the present embodiment with respect to profile data having a longest cache memory unchanged period existing in a loop.
Fig. 10 is a diagram showing a loop development method for the profile data illustrated in Fig. 9.
Fig. 11 is a block diagram showing structure of a compiler according to another embodiment of the present invention.
Fig. 12 is a block diagram showing structure of a compiler which realizes a conventional code scheduling method.

### DESCRIPTION OF THE PREFERRED EMBODIMENTS

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

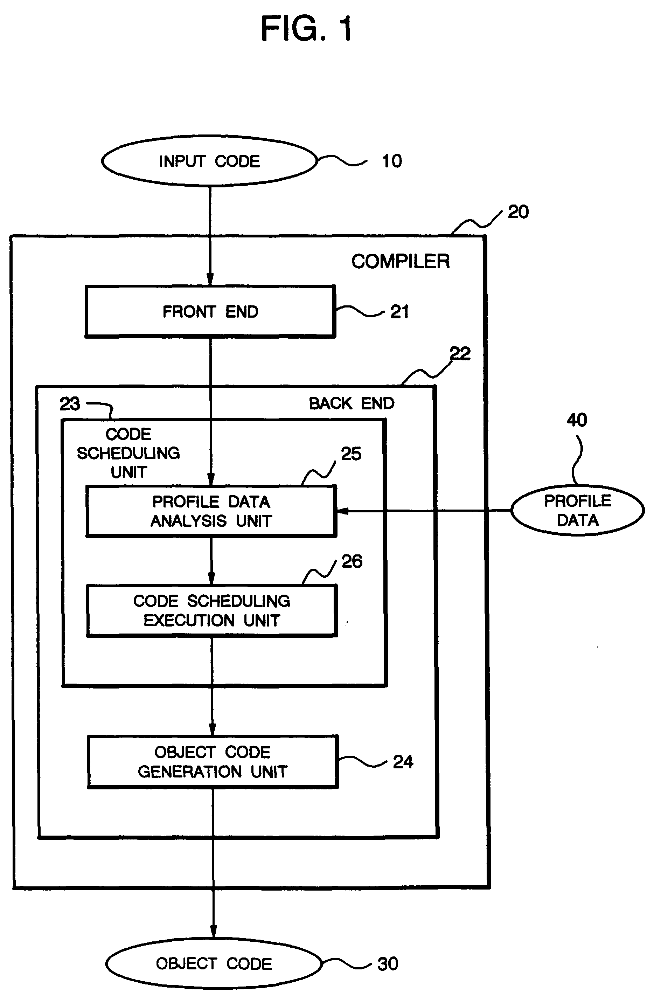

Fig. 1 is a block diagram showing structure of a compiler according to one embodiment of the present invention. A compiler 20 of the present embodiment includes a front end 21 and a back end 22 as illustrated in Fig. 1. The compiler 20 receives input of an input code 10 as a code of a source program and complies the same to output an object code 30 as a code of an object program. The back end 22 includes a code scheduling unit 23 and an object code generation unit 24. The code scheduling unit 23 includes a profile data analysis unit 25 and a code scheduling execution unit 26. In Fig. 1, illustration is made only of a characteristic part of the structure of the present embodiment and that of the remaining common part is omitted.

The compiler 20 is implemented by a data processor of a computer system adopting a nonblocking cache system. A computer program which controls operation of the data processor is stored in a common storage medium such as a magnetic disk or a semiconductor memory for provision and loaded into the data processor to execute the respective functions of the compiler 20.

In the above-described structure, the front end 21 conducts lexical analysis processing and parsing processing for a source program composed of the input codes 10 to generate and output an intermediate language code.

The code scheduling unit 23 of the back end 22 conducts code scheduling with respect to an intermediate language code output from the front end 21.

The profile data analysis unit 25 of the code scheduling unit 23 analyzes profile data 40 to detect a cache miss penalty generation part. The unit 25 also analyzes cache memory operation information for use in the code scheduling execution unit 26. Here, cache memory operation information represents whether operation of reading data causing a cache miss from the main memory into the cache memory is conducted at each operation clock or not.

The code scheduling execution unit 26 conducts code scheduling for lowering cache miss penalty detected by the profile data analysis unit 25 based on cache memory operation information obtained by the profile data analysis unit 25.

The object code generation unit 24 generates an object code 30 constituting an object program based on an intermediate language code in question.

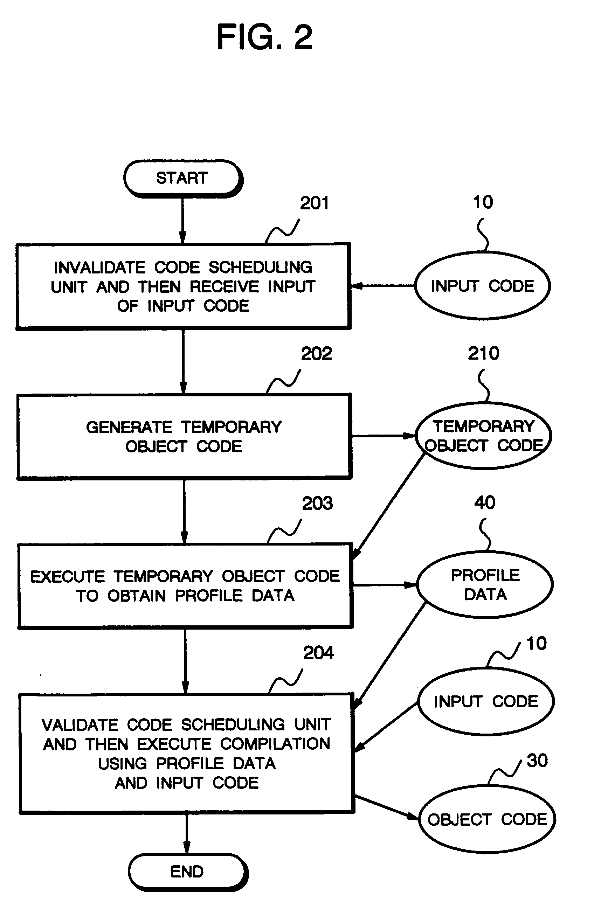

In the above-described structure, the compiler 20 generates the object code 30 in a manner as shown in Fig. 2. More specifically, the compiler 20 first invalidates the code scheduling unit 23 in the back end 22 and subsequently receives input of the input code 10 (Step 201) to generates a temporary object code 210 as an intermediate code before code scheduling (Step 202). Then, the compiler executes the temporary object code 210 on a target computer or by using a simulator which simulates operation of the computer to obtain the profile data 40 (Step 203). Next, after validating the code scheduling unit 23, the compiler executes compilation by using the profile data 40 and the input code 10 to obtain the object code 30 (Step 204).

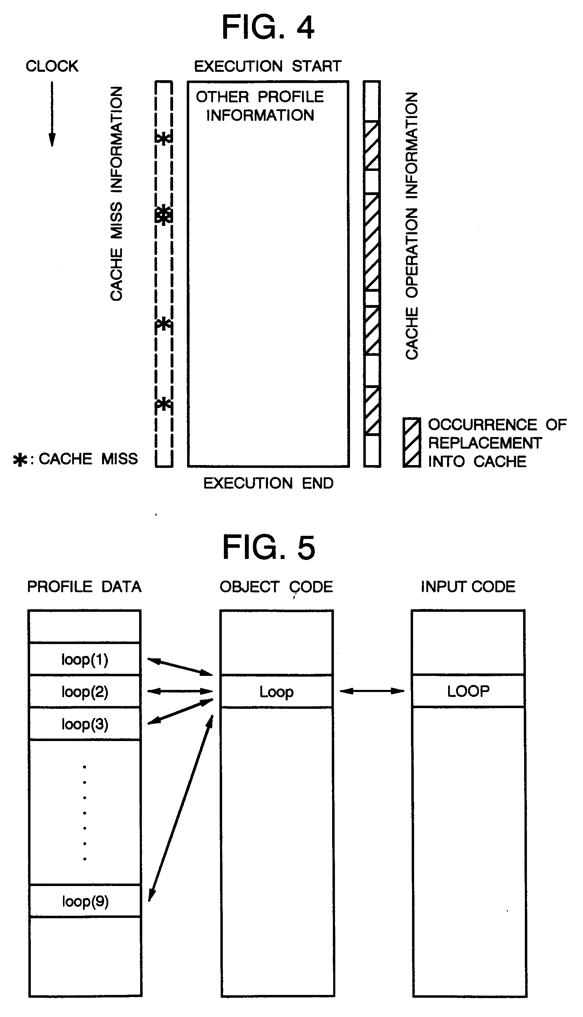

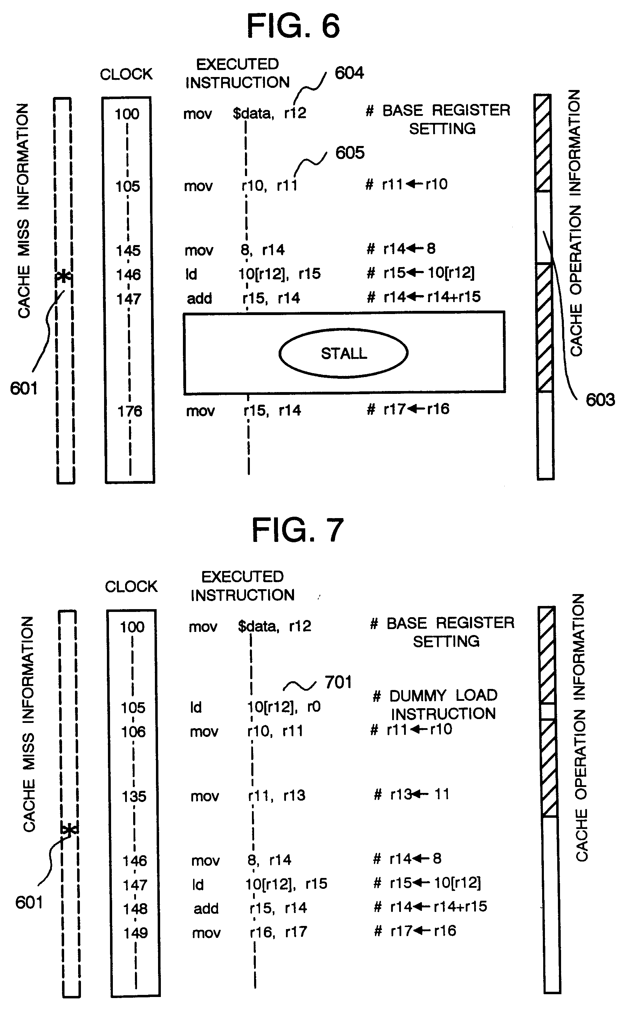

Description will be next made of the profile data 40 with reference to Figs. 4 to 6. The profile data 40 is data recording operation conditions of the CPU at the execution of an object code for each operation clock. Here, operation conditions of the CPU include an executed instruction, operands, an execution starting clock, cache memory operation information and cache miss generation and in a case of a main memory reference instruction, they also include a relevant reference address. Other than the foregoing information related to CPU operation conditions, the profile data 40 includes such data for finding correspondence between an input code control structure, and each executed instruction of the profile data and an object code as illustrated in Fig. 5. Fig. 4 shows an example of information including cache memory operation information, cache miss generation information, etc. Fig. 6 shows a concrete example of the profile data 40.

With reference to Fig. 6, "*" indicated in the cache miss information is a mark indicating that a cache miss is caused by a load instruction 602. In this case, because a register r15 into which data is loaded by the load instruction 602 is referred to by an immediately succeeding addition instruction, a subsequent addition instruction can not be executed until replacement of data into the cache memory is completed to finish the load instruction 602, whereby the CPU stops. In the figure, "stall" indicates that the CPU stops.

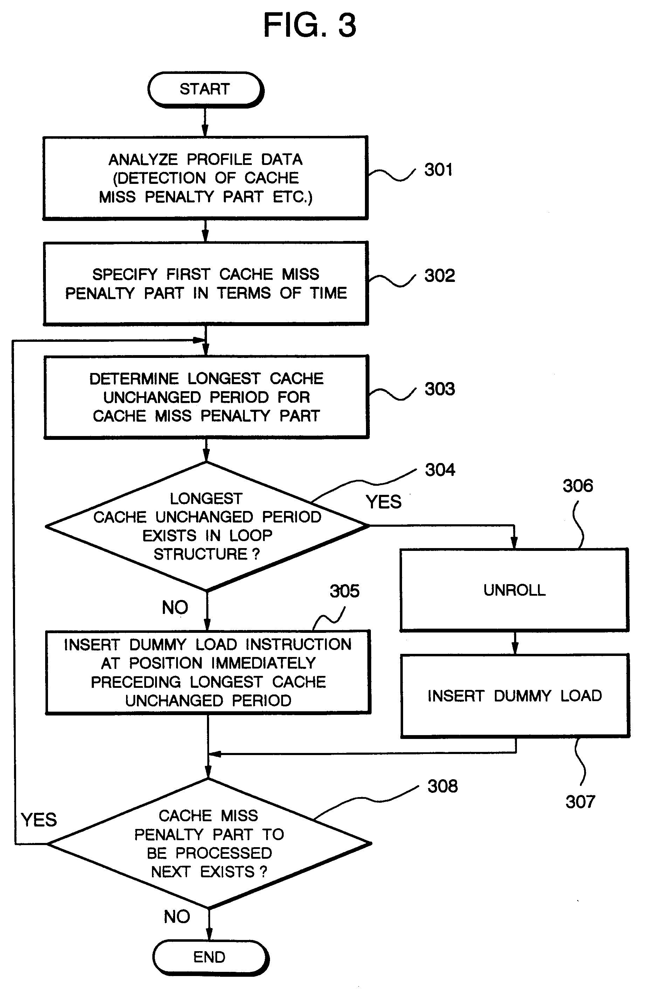

Fig. 3 is a flow chart showing, in a case where the scheduling unit 23 is validated in the compiler 20 to conduct compilation, operation of the code scheduling unit 23 (see Fig. 2, Step 204). With reference to Fig. 3, in the code scheduling unit 23, first, the profile data analysis unit 25 scans the profile data 40 to detect a part at which cache miss penalty occurs (hereinafter referred to as a cache miss penalty part) (Step 301). With respect to cache memory operation information, the profile data analysis unit 25 also analyzes the number of clocks in a continuous period when no data replacement into the cache memory takes place (region other than those denoted by slanting lines in the cache memory operation information shown in Fig. 4).

Next, with respect to each of cache miss penalties detected by the profile data analysis unit 25, the code scheduling execution unit 26 conducts code scheduling for lowering cache miss penalty in the order of its execution. More specifically, the unit 26 first specifies a first cache miss penalty part (Step 302), conducts code scheduling by the processing of Steps 303 to 307, determines whether the processing is completed for each of all the cache miss penalty parts (Step 308) and when a cache miss penalty part to be processed exists, repeats the processing for the cache miss penalty part as a next processing target.

Operation at Steps 303 to 307 for the code scheduling processing will be described in detail with reference to Figs. 6 to 10. In the processing of Step 303, the code scheduling execution unit 26 traces back the profile data in terms of time from the execution of the load instruction 602 causing the cache miss penalty 601 detected in the profile data which is shown in Fig. 6 to determine a longest period 603 when no data replacement into the cache memory takes place (hereinafter referred to as the longest cache memory unchanged period 603). If the longest cache memory unchanged period 603 is shorter than a period from the execution of a load instruction causing a cache miss until the execution of an instruction to refer to the data in question or a load instruction causing DCM (hereinafter referred to as a lower limit period), no code scheduling for lowering cache miss penalty will be conducted. Neither when a longest period when no data replacement into the cache memory takes place is within a loop structure whose number of iterations is unfixed, the code scheduling execution unit 26 conducts code scheduling. This is because for the loop unrolling to be conducted later, the number of iterations of the loop should be defined at the time of compilation. On the other hand, when the load instruction in question is on indirect reference, since an address of the main memory to be referred to depends on a base register, the longest cache memory unchanged period 603 should come after a register position 604 at which the relevant register value is set.

Next, the code scheduling execution unit 26 inserts a load instruction to read ahead data to be referred to by the load instruction in question into the cache memory (hereinafter referred to as a dummy load instruction) into a position immediately preceding the longest cache memory unchanged period 603. A dummy load instruction inserting manner, as shown at the branch Step 304, varies in processing with a case where the longest cache memory unchanged period 603 exists in the loop structure and a case where the same does not.

Description will be first made of a case where the longest cache memory unchanged period 603 does not exist in the loop structure as shown in Step 305. For the description of concrete operation, it is assumed that a computer system targeted by the compiler 20 of the present embodiment needs 30 clock cycles for the data replacement into the cache memory. The profile data illustrated in Fig. 6 shows that because a cache miss occurs in the execution of the load instruction 602 and an instruction (add r15, r14) to refer to the data in question is arranged at a position immediately succeeding to the load instruction, the CPU stops until the clock number '176' at which data is read into the register r15. It is assumed here that the profile data has the longest cache memory unchanged period 603 of 40 clock cycles starting with a mov instruction 605 ahead of the load instruction 602. The code scheduling execution unit 26 inserts a dummy load instruction 701 to read the same address as that of the load instruction 602 at a position immediately preceding the mov instruction 605 as shown in Fig. 7 in the above-described manner. With the resultant code, although a cache miss occurs due to the execution of the dummy load instruction 701, other instruction is executed during the execution of data replacement into the cache memory at that time to avoid generation of a cache miss by the original load instruction 602. Then, a mov instruction executed at the clock number '176' in the profile data as of before the insertion of the dummy load instruction 701 (Fig. 6) is executed at the clock number '149' of the profile data as of after the insertion of the dummy load instruction 701 (Fig. 7). As a result, a code execution time will be shortened by 27 clock cycles after the scheduling.

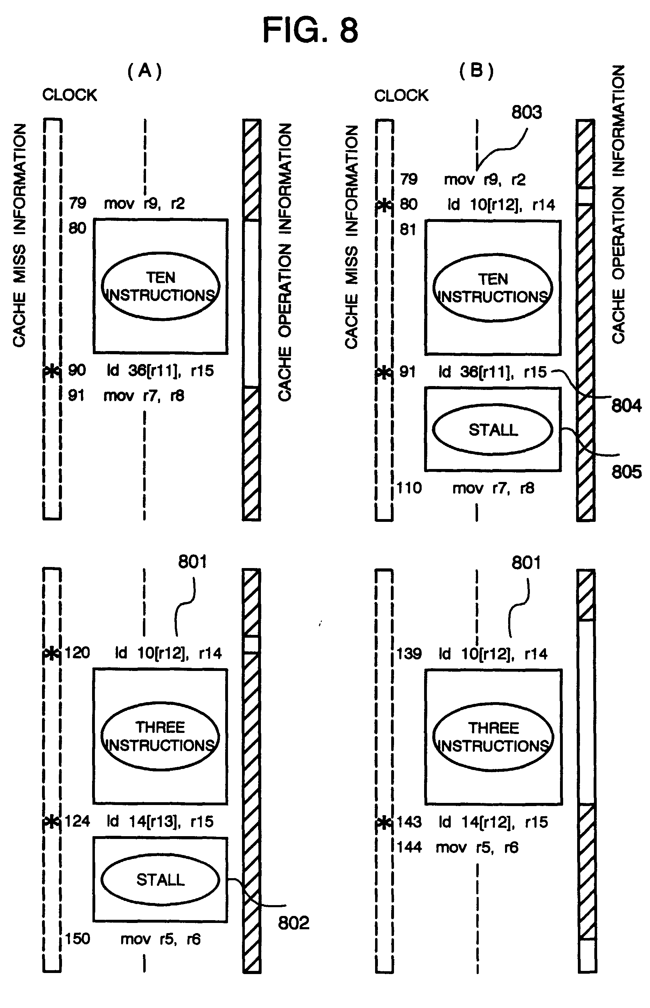

The computer system used as a target will have DCM when the longest cache memory unchanged period 603 is shorter than a period of data replacement into a cache memory. However, since the longest cache memory unchanged period 603 is longer than the lower limit period, the system can execute more instructions during the longest cache memory unchanged period 603 in parallel with the data replacement into the cache memory than those executed in a case where no dummy load instruction 701 is inserted. Operation in this case will be specifically described with reference to Figs. 8(A) and 8(B). Fig. 8(A) illustrates an example of profile data as of before the insertion of a dummy load instruction, while Fig. 8(B) illustrates an example of profile data as of after the insertion of a dummy load instruction. A target computer system is assumed to require 30 clock cycles for the data replacement into the cache memory.

At the state shown in Fig. 8(A), the profile data has cache misses occurring at the clock numbers '120' and '124' and has DCM detected. Assuming here that the lower limit period is of three clock cycles and execution of one instruction needs one clock cycle, three instructions are executed during this period. It is assumed that in the profile data in question, the profile data analysis unit 25 detects, ahead of a load instruction 801, the longest cache memory unchanged period 603 of 10 clock cycles starting at the clock number '80'. In this case, insertion of a dummy load instruction 803 as illustrated in Fig. 8(B) by the code scheduling execution unit 26 results in the profile data having DCM caused by a load instruction 804 at the clock number 91. The code in question, however, has ten instructions executed before the occurrence of the DCM by the load instruction 804. As a result, while a stall period 802 as of before the insertion of the dummy load instruction 803 has 25 clock cycles, a stall period 805 as of after the insertion is reduced to have 18 clock cycles. In addition, the DCM occurring at the clock number '124' is eliminated by the reading-ahead of data by the dummy load instruction 803 to accordingly eliminate stall at this place.

In terms of form, the foregoing operation simply shifts the stall due to DCM occurring at the clock number '124' to the stall due to DCM caused by the load instruction at the clock number '91'. Nevertheless, execution of more instructions before the occurrence of DCM results in shortening a period of stall due to DCM to improve an execution rate. In other words, structure of an ultimately obtained object code 30 remains the same in that DCM occurs to stop the CPU. However, because a condition is satisfied that the longest cache memory unchanged period 603 is longer than a lower limit period, more instructions can be executed during a period when data replacement into the cache memory is conducted by a dummy load instruction than those executed during the lower limit period. This shortens a CPU stopped period caused by DCM, resulting in reduction in an execution time of the object code 30.

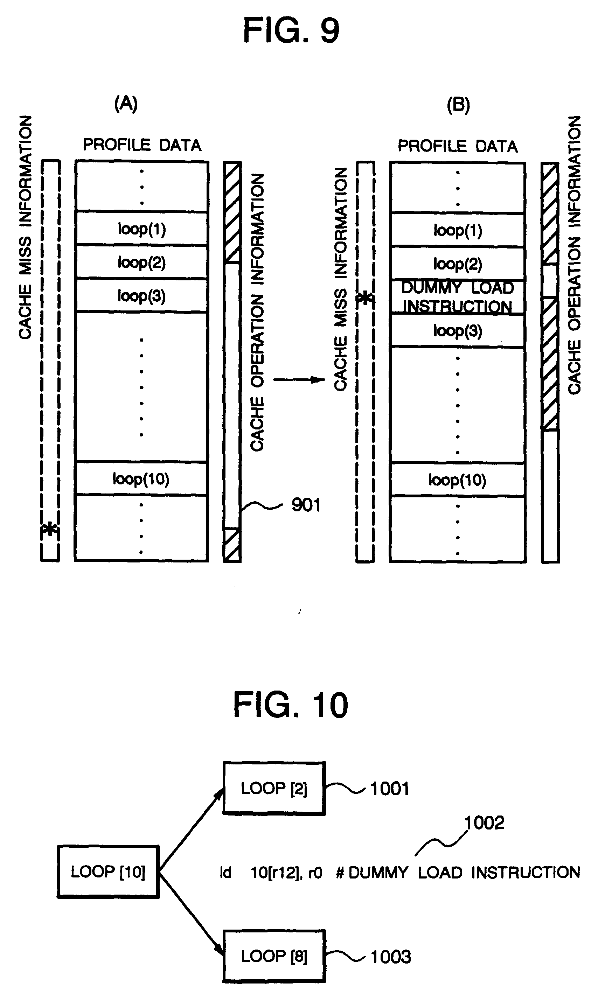

Description will be next made of operation at Steps 306 and 307 to be conducted when the longest cache memory unchanged period 603 exists in the loop structure. In this case, it is possible that a longest cache memory unchanged period exists in a specific iteration of the loop as shown in Fig. 9(A). Therefore, the code scheduling execution unit 26 is not allowed to simply insert a dummy load instruction into the loop, so that the loop structure should be modified.

Assuming that the profile data analysis unit 25 detects a longest cache memory unchanged period 901 in the profile data shown in Fig. 9(A). In the figure, loop(n) indicates a part of execution of n-th iteration of the loop. For the sake of explanation, the loop containing the longest cache memory unchanged period 603 is assumed to be made up of ten iterations of loop. Since the longest cache memory unchanged period 901 starts midway in loop(2), inserting a dummy load instruction at a position immediately preceding the longest cache memory unchanged period 901 can be realized by such insertion that allows the dummy load instruction to be executed only once in and after the third iteration. Therefore, the code scheduling execution unit 26 unrolls a loop 1001 for two iterations ahead of the original loop as illustrated in Fig. 10. Then, the unit 26 inserts a dummy load instruction 1002 between a loop main body 1003 for the remaining eight iterations and the unrolled loop 1001. Fig. 9(B) shows profile data as of after the insertion of the dummy load instruction 1002. Reference to Fig. 9(B) finds that in the target computer system, while replacement of data into the cache memory due to a cache miss caused by the dummy load instruction 1002 is conducted, the third and subsequent loop iterations are executed in parallel therewith.

The target computer system intentionally causes a cache miss by the execution of the dummy load instruction in question, thereby executing subsequent instructions in parallel with the execution of data reading into the cache memory. In addition, during the execution time of an object code, a cache miss by the original load instruction can be avoided. As a result, the execution time of the object code 30 is shortened.

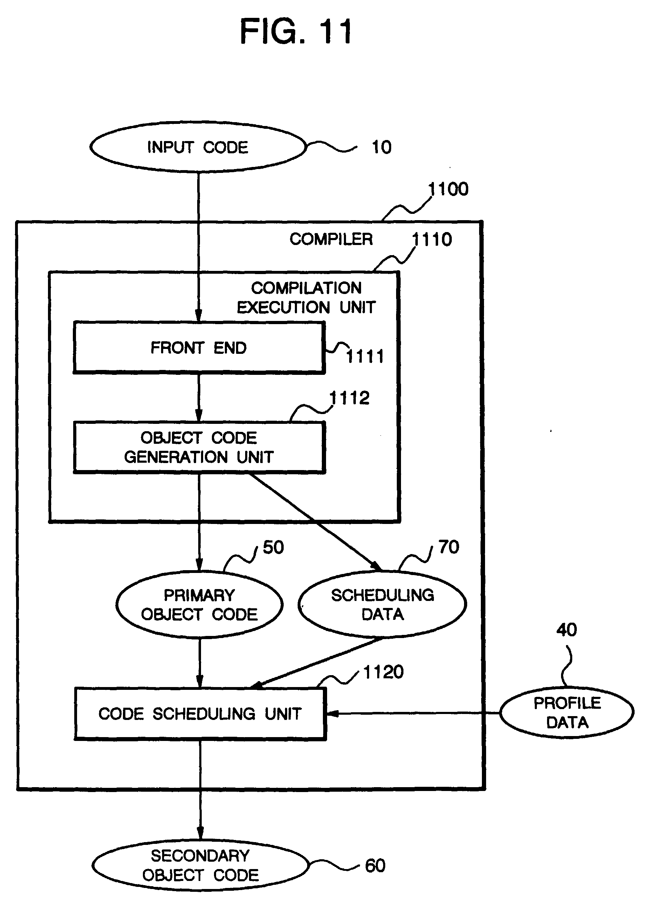

Fig. 11 is a block diagram showing structure of a compiler according to another embodiment of the present invention. With reference to Fig. 11, a compiler 1100 of the present embodiment includes a compilation execution unit 1110 for compiling an input code 10 and a code scheduling unit 1120 for conducting code scheduling with respect to a code compiled by the compilation execution unit 1110. In Fig. 1, illustration is made only of a characteristic part of the structure of the present embodiment and that of the remaining common part is omitted.

The compilation execution unit 1110 includes a front end 1111 and an object code generation unit 1112 as a back end and has the same functions as those of a conventional common compiler. More specifically, the front end 1111 conducts lexical analysis processing and parsing processing for a source program composed of the input codes 10 to generate and output an intermediate language code, and the object code generation unit 1112 generates an object code constituting an object program based on the intermediate language code. In this embodiment, since an object code output from the object code generation unit 1112 of the compilation execution unit 1110 is subjected to code scheduling processing later by the code scheduling unit 1120, it is referred to as a primary object code 50. In other words, the primary object code 50 is equivalent to the temporary object code 210 obtained by the execution of compilation after the invalidation of the code scheduling unit 23 in the first embodiment shown in Fig. 1. The compilation execution unit 1110 also outputs, as scheduling data 70, data obtained in the course of generation of the primary object code 50 for finding a correspondence relationship between the control structure of the input code 10 and the primary object code 50, and the profile data 40, together with the primary object code 50.

The code scheduling execution unit 1120 receives input of the primary object code 50 and the scheduling data 70 output from the compilation execution unit 1110 and the profile data 40 and conducts code scheduling for lowering cache miss penalty to generate and output a secondary object code 60 as an ultimate object code. Since details of the structure and operation of the code scheduling unit 1120 are the same as those of the code scheduling unit 23 of the first embodiment shown in Fig. 1, no description will be made thereof here.

The above-described compilation execution unit 1110 and the code scheduling unit 1120 are implemented by a data processor of a computer system adopting a nonblocking cache system. A computer program which controls operation of the data processor is stored in a common storage medium such as a magnetic disk or a semiconductor memory for provision and loaded into the data processor to execute the respective functions.

As described in the foregoing, the compiler of the present invention and a code scheduling method thereof cope with two kinds of cache miss penalties, Access Before Refill and Double Cache Miss, by inserting a dummy load instruction to read ahead data into a cache memory into a period when no data replacement into the cache memory due to a cache miss takes place to enable reading of data into the cache memory and instructions subsequent to the dummy load instruction to be executed in parallel with each other, as well as avoiding a cache miss caused by an original load instruction. In other words, scheduling is conducted such that data is read ahead to intentionally cause a cache miss earlier than usual, thereby allowing other instruction to be executed during the reading from a main memory into a cache memory. This enables a computer system adopting a nonblocking cache system to have improved execution efficiency in the execution of processing using a generated object code.

## Claims

1. A compiler for compiling a source program to generate a code of an object program for a computer system applicable to a nonblocking cache memory, comprising:
analysis means (21, 1111) for receiving input of a source program to conduct lexical analysis and parsing;
code generation means (24, 1112) for generating a code of an object program based on an analysis result obtained by said analysis means (21, 1111); and
code scheduling means (23, 1120) for conducting code scheduling for the reduction of cache miss penalty based on an analysis result obtained by said analysis means (21, 1111) and profile data recording information about the operation of a CPU obtained by executing a code generated by said code generation means (24, 1112);
said code scheduling means (23, 1120) comprising
profile data analysis means (25) for referring to an analysis result obtained by said analysis means (21, 1111) and analyzing said profile data to detect cache miss penalty existing in said profile data, and
scheduling execution means (26) for generating and inserting, with respect to a load instruction which causes a cache miss detected by said profile data analysis means (25), a dummy instruction code for reading ahead data to be read by the load instruction.

2. The compiler as set forth in claim 1, wherein
said profile data at least includes information regarding generation of cache miss penalty at the execution of said code and generation of the processing for replacing data into the cache memory according to the cache miss.

3. The compiler as set forth in claim 1, wherein
said analysis means (21) constitutes a front end and said code generation means (24) and said code scheduling means (23) constitute a back end (22), and wherein
said back end (22)
receives input of said analysis result from said front end which is said analysis means (21) to first generate a code of said object program,
next invalidates said code scheduling means (23) to generate said profile data by using said generated code, and
then validates said code scheduling means (23) to generate a code with said dummy instruction code inserted by using said profile data.

4. The compiler as set forth in claim 1, wherein
said analysis means (1111) and said code generation means (1112) constitute compilation means (1110), and wherein
said compilation means (1110) generates a primary code of said object program by the processing by said analysis means (1111) and said code generation means (1112), as well as generating said profile data by using the primary code, and
said code scheduling means (1120) inserts said dummy instruction code into said primary code by using said profile data.

5. The compiler as set forth in claim 1, wherein
said profile data analysis means (25) analyzes, out of said profile data, information regarding a cache miss and information regarding generation conditions for the processing of replacing data into the cache memory prior to the generation of cache miss penalty, and
detects a longest period when no processing takes place for replacing data into the cache memory by said analysis.

6. The compiler as set forth in claim 1, wherein
said scheduling execution means (26) inserts a prefetch instruction to store data in the cache memory in advance ahead of a main memory access instruction which causes cache miss penalty in a code of said object program generated by said code generation means (24, 1112).

7. A code scheduling method of a compiler for scheduling codes of an object program obtained by compilation of a source program so as to be applied to a nonblocking cache memory, comprising the steps of:
receiving input of a source program to conduct lexical analysis and parsing;
generating a code of an object program based on an analysis result obtained by said analysis step; and
conducting code scheduling for the reduction of cache miss penalty based on an analysis result obtained by said analysis step and profile data recording information about the operation of a CPU obtained by executing a code generated by said code generation step;
said code scheduling step including
referring to an analysis result obtained by said analysis step and analyzing said profile data to detect cache miss penalty existing in said profile data, and
with respect to a load instruction which causes a cache miss detected by said cache miss penalty detection step, generating and inserting a dummy instruction code for reading ahead data to be read by the load instruction.

8. The code scheduling method of a compiler as set forth in claim 7, wherein
said cache miss penalty detection step including
analyzing, out of said profile data, information regarding a cache miss and information regarding generation conditions for the processing of replacing data into the cache memory prior to the generation of cache miss penalty, and
detecting a longest period when no processing takes place for replacing data into the cache memory by said analysis.

9. The code scheduling method of a compiler as set forth in claim 7, wherein
at said dummy code insertion step, a prefetch instruction to store data in the cache memory in advance is inserted ahead of a main memory access instruction which causes cache miss penalty in a code of said object program generated by said code generation step.
